# EUROPEAN PATENT APPLICATION

(11) **EP 4 478 635 A1**
(43) Date of publication of application: **18.12.2024**
(21) Application number: 22925359.6
(22) Date of filing: 11.02.2022
(51) Int. Cl.: H04L 1/00, H04L 5/00

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); ZHANG, Boyuan, Dongguan, Guangdong 523860 (CN); LU, Qianxi, Dongguan, Guangdong 523860 (CN)
(74) Representative: RGTH
(86) International application number: PCT/CN2022/075960
(87) International publication number: WO 2023/150997

(57) **Abstract**

Provided are a communication method and a communication apparatus. The method comprises: a terminal device performs a first operation according to first information, the first information comprising network coding (NC) configuration information, NC input information and/or NC state information of the terminal device, the NC state information indicating NC activation or NC deactivation, and the first operation comprising at least one of the following: configuring an NC entity, configuring an NC layer, performing the NC activation and performing the NC deactivation, generating a data packet, transmitting the data packet, considering the NC activation, and considering the NC deactivation. The method in embodiments of the present application can achieve an NC function in a communication system.

## Description

### TECHNICAL FIELD

This application relates to the field of communication technologies, and more specifically, to a communication method and a communication apparatus.

### BACKGROUND

With the development of communication technologies, some communication systems expect to introduce network coding (network coding, NC) functions, to improve transmission efficiency. However, it is still unclear how to achieve NC functions.

### SUMMARY

This application provides a communication method and a communication apparatus, which can achieve an NC function in a communication system.

According to a first aspect, a communication method is provided, including: performing, by a terminal device, a first operation based on first information, where the first information includes network coding NC configuration information, NC input information, and/or NC state information of the terminal device, the NC state information indicates NC activation or NC deactivation, and the first operation includes at least one of the following: configuring an NC entity, configuring an NC layer, performing NC activation or NC deactivation, generating a data packet, transmitting a data packet, determining NC as being active, or determining NC as being inactive.

According to a second aspect, a communication apparatus is provided, including an execution unit, configured to perform a first operation based on first information, where the first information includes network coding NC configuration information, NC input information, and/or NC state information of the apparatus, the NC state information indicates NC activation or NC deactivation, and the first operation includes at least one of the following: configuring an NC entity, configuring an NC layer, performing NC activation or NC deactivation, generating a data packet, transmitting a data packet, determining NC as being active, or determining NC as being inactive.

According to a third aspect, a communication apparatus is provided, including a memory and a processor, where the memory is configured to store a program, and the processor is configured to invoke the program in the memory to perform the method according to the first aspect.

According to a fourth aspect, a communication apparatus is provided, including a processor, configured to invoke a program from a memory to perform the method according to the first aspect.

According to a fifth aspect, a chip is provided, including a processor, configured to invoke a program from a memory to cause a device installed with the chip to perform the method according to the first aspect.

According to a sixth aspect, a computer-readable storage medium is provided, and the computer-readable storage medium stores a program that causes a computer to perform the method according to the first aspect.

According to a seventh aspect, a computer program product is provided, and the computer program product includes a program that causes a computer to perform the method according to the first aspect.

According to an eighth aspect, a computer program is provided, where the computer program causes a computer to perform the method according to the first aspect.

In embodiments of this application, a terminal device performs a first operation based on NC configuration information, NC input information, and/or NC state information of the terminal device, thereby achieving an NC function in a communication system.

### BRIEF DESCRIPTION OF DRAWINGS

FIG. 1 is a schematic diagram of a wireless communication system to which an embodiment of this application is applied.
FIG. 2 is a schematic diagram of a protocol stack to which an embodiment of this application is applied.
FIG. 3 is a schematic diagram of a protocol stack to which another embodiment of this application is applied.
FIG. 4 is a schematic diagram of a protocol stack to which still another embodiment of this application is applied.
FIG. 5 is a schematic flowchart of a communication method according to an embodiment of this application.
FIG. 6 is a schematic flowchart of a communication method according to another embodiment of this application.
FIG. 7 is a schematic diagram of a structure of a communication apparatus according to an embodiment of this application.
FIG. 8 is a schematic diagram of a structure of an apparatus according to an embodiment of this application.

### DESCRIPTION OF EMBODIMENTS

The following describes technical solutions in this application with reference to the accompanying drawings.

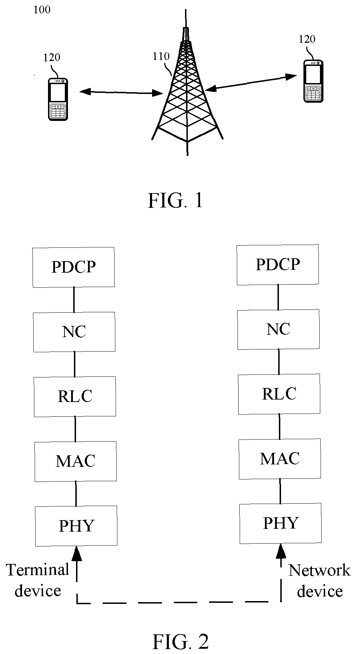

FIG. 1 shows a wireless communication system 100 to which an embodiment of this application is applied. The wireless communication system 100 may include a network device 110 and user equipment (user equipment, UE) 120. The network device 110 may communicate with the UE 120. The network device 110 may provide communication coverage for a specific geographic area, and may communicate with the UE 120 within the coverage area. The UE 120 may access a network (for example, a wireless network) through a network device 110.

FIG. 1 exemplarily shows one network device and two UEs. In at least one embodiment, the wireless communication system 100 may include a plurality of network devices, and another quantity of terminal devices may be included in the coverage of each network device, which is not limited in embodiments of this application. In at least one embodiment, the wireless communication system 100 may further include other network entities such as a network controller and a mobility management entity, which is not limited in this embodiment of this application.

It should be understood that technical solutions of embodiments of this application may be applied to various communication systems, such as a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, such as a 6th generation mobile communication system or a satellite communication system.

The UE in embodiments of this application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communication device, a user agent, or a user apparatus. The UE in embodiments of this application may be a device providing a user with voice and/or data connectivity and may be used to connect to people, objects, and machines, such as a handheld device or vehicle-mounted device having a wireless connection function. The UE in embodiments of this application may be a mobile phone (mobile phone), a tablet computer (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal (smart city) in smart city, a wireless terminal in smart home (smart home), or the like. In at least one embodiment, the UE may function as a base station. For example, the UE may function as a scheduling entity, and provides a sidelink signal between UEs in V2X, D2D, or the like. For example, a cellular phone and a vehicle communicate with each other by using a sidelink signal. A cellular phone and a smart household device communicate with each other, without relaying a communication signal through a base station.

The network device in embodiments of this application may be a device for communicating with the UE. The network device may also be referred to as an access network device or a wireless access network device. For example, the network device may be a base station. The network device in embodiments of this application may be a radio access network (radio access network, RAN) node (or device) that connects the UE to a wireless network. The base station may broadly cover the following various names, or may be interchanged with the following names, such as a NodeB, an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof.

In some embodiments, the network device may be a fixed or mobile network device. For example, a helicopter or an unmanned aerial vehicle may be configured to function as a mobile network device, and one or more cells may move based on a position of the mobile network device. In other examples, a helicopter or an unmanned aerial vehicle may be configured to function as a device in communication with another network device. In some embodiments, the network device may refer to a CU or a DU, or the network device may include a CU and a DU, or the network device further includes an AAU.

It should be understood that the network device may be deployed on land, including an indoor or outdoor scenario and a handheld or vehicle-mounted scenario, or may be deployed on water, or may be deployed on an airplane, a balloon, or a satellite in the air. The network device and a scenario in which the network device is located in embodiments of this application are not limited in embodiments of this application.

It should be further understood that all or some of functions of the network device and the UE in this application may alternatively be implemented by software running on hardware, or by virtual functions instantiated on a platform (for example, a cloud platform).

With development the of communication technologies, some communication systems expect to introduce network coding (network coding, NC) functions to improve reliability of data transmission while utilizing fewer transmission resources, thereby improving transmission efficiency. However, it is still unclear how to implement NC functions in communication systems.

In order to resolve one or more of the foregoing technical problems, this application proposes a communication method and a communication apparatus, which can implement an NC function in a communication system.

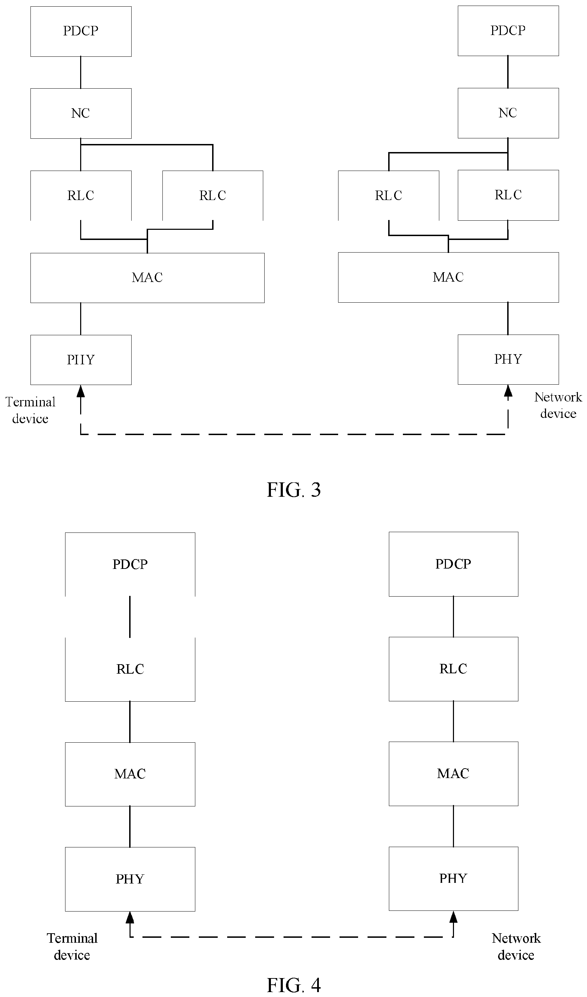

In embodiments of this application, in order to implement the NC function, an NC layer may be added to an existing protocol stack. An NC entity (entity) may be established at the NC layer, and the NC entity may perform NC-related operations. For example, FIG. 2 and FIG. 3 are schematic diagrams of a protocol stack in a communication system. FIG. 2 and FIG. 3 each include a radio resource control (radio resource control, RRC) layer (the terminal device side and the network device side each include two RLC layers in FIG. 3), a packet data convergence protocol (packet data convergence protocol, PDCP) layer, a radio link control (radio link control, RLC) layer, a media access control (media access control, MAC) layer, and a physical (physical, PHY) layer. It should be noted that, in the protocol stacks shown in FIG. 2 and FIG. 3, an example in which the NC layer is located between the PDCP layer and the RLC layer is used for description. In embodiments of this application, the NC layer may alternatively be located at another position in the protocol stack, and this is not limited in embodiments of this application. For example, the NC layer may alternatively be located between the RLC layer and the MAC layer. Alternatively, in the protocol stacks shown in FIG. 2 and FIG. 3, a service data adaptation protocol (service data adaptation protocol, SDAP) layer may be arranged above the PDCP layer, and the NC layer may alternatively be located between the PDCP layer and the SDAP layer.

In a data packet header format, correspondingly, an NC packet header may be located between two existing protocol layers in which the NC layer is located. For example, if the NC layer is located between the PDCP layer and the RLC layer, a packet header order may be MAC, RLC, NC, PDCP, and SDAP (if any); if the NC layer is located between the RLC layer and the MAC layer, a packet header order may be MAC, NC, RLC, PDCP, and SDAP (if any). Examples are not listed one by one herein.

Alternatively, an NC sublayer, an NC function, an NC algorithm, or an NC entity (for example, referred to as NC instance) may be established within a protocol layer in an existing protocol stack. In other words, the protocol layer in the existing protocol stack includes the NC sublayer, the NC function, the NC algorithm, or the NC entity; in other words, an existing protocol entity includes the NC sublayer, the NC function, the NC algorithm, or the NC entity. For example, FIG. 4 is a schematic diagram of a protocol stack in a communication system, and an NC sublayer, an NC function, or an NC algorithm may be added to a PDCP layer. Alternatively, an NC sublayer, an NC function, an NC algorithm, or an NC entity (instance) may be added into a PDCP entity. Alternatively, an NC entity may be established in a PDCP entity in the PDCP layer, that is, the NC function can be embedded in the PDCP entity. Certainly, an NC entity may alternatively be established in another protocol layer in the protocol stack shown in FIG. 4, which is not limited in embodiments of this application. Alternatively, in the protocol stack shown in FIG. 4, an SDAP layer may be further arranged above the PDCP layer, and the NC entity may alternatively be established in the SDAP layer.

In embodiments of this application, a protocol stack architecture (for example, the protocol stack architecture shown in FIG. 2 or FIG. 3) may be preconfigured for a terminal device or a network device. In this case, regardless of whether the NC layer (or the NC entity) is active or inactive, a data packet needs to be transmitted through the NC layer or the NC entity. In this way, it is unnecessary to introduce a plurality of protocol layer architectures, thereby simplifying processing during the transmission of the data packet.

Alternatively, it is also possible to support or preconfigure a plurality of protocol stack architectures for the terminal device or the network device. In a case that the NC layer (or the NC entity) is active, one protocol stack architecture (for example, the protocol stack architecture shown in FIG. 2 or FIG. 3) of the plurality of protocol stack architectures is used. In a case that the NC layer (or the NC entity) is inactive, another (for example, the protocol stack architecture shown in FIG. 4) of the plurality of protocol stack architectures is used. In this way, in a case that the NC layer (or the NC entity) is inactive, a data packet is unnecessary to be transmitted through the NC layer or the NC entity (the data packet needs to be transmitted through the NC layer or the NC entity in a case that the NC layer (or the NC entity) is active), thereby improving transmission efficiency of the system.

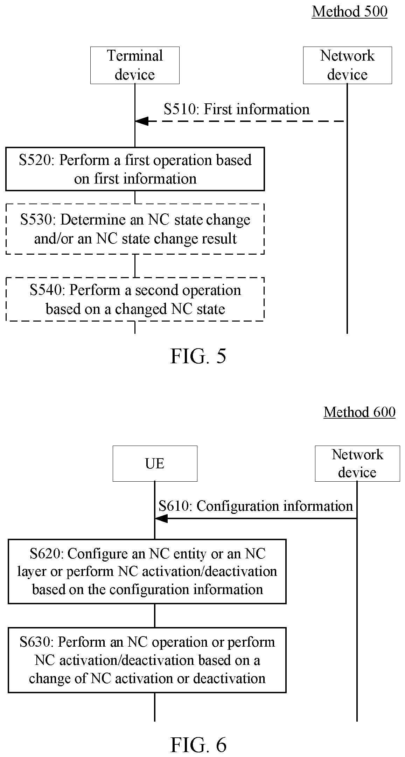

The following describes embodiments of this application in detail with examples with reference to FIG. 5 and FIG. 6.

FIG. 5 is a schematic flowchart of a communication method according to an embodiment of this application. A method 500 shown in FIG. 5 may include step S520, and details are as follows.

In step S520, a terminal device performs a first operation based on first information.

The first information may include network coding NC configuration information (NC config), NC input information (NC input), and/or NC state information of the terminal device.

The NC configuration information may be used to configure an NC layer or an NC entity (entity). For example, the NC configuration information includes at least one of the following: identification information (coding profile id) of the NC configuration information, a quantity of segments supported by NC, a quantity of data streams supported by the NC, a number of data packets supported by the NC, and an NC algorithm. The NC input information may refer to input information received by the NC layer or the NC entity. The NC state information may indicate NC activation or NC deactivation.

In this embodiment of this application, the NC entity (entity) or the NC layer may include at least one of the following:
an NC entity (instance), an NC sending entity (instance) and NC receiving entity (instance), an NC sending function and NC receiving function, a network encoding function, or a network decoding function.

The NC configuration information, the NC input information, and/or the NC state information may include at least one of the following granularities: bearer (per bearer), packet data convergence protocol PDCP entity (per PDCP entity), radio link control RLC entity (per RLC entity), NC entity (per NC entity), terminal device, or cell (cell common).

In at least one embodiment, the NC configuration information, the NC input information, and/or the NC state information may be predefined. For example, the NC configuration information, the NC input information, and/or the NC state information may be predefined by a protocol. Alternatively, the NC configuration information, the NC input information, and/or the NC state information may be determined by a network device. For example, before S510, the method 500 may further include a step in which the network device may send or indicate the first information to the terminal device. In at least one embodiment, the network device may indicate the NC configuration information to the terminal device through a radio resource control (radio resource control, RRC) message, a media access control control element (media access control control element, MAC CE), or downlink control information (downlink control information, DCI).

In at least one embodiment, the first operation may include at least one of the following: configuring an NC entity, configuring an NC layer, performing NC activation and NC deactivation, generating a data packet, transmitting a data packet, determining NC as being active, or determining NC as being inactive.

For example, a terminal device performing a first operation based on first information may include at least one of the following:
if the NC state information represents or indicates NC activation, performing, by the terminal device, NC activation; if the NC state information represents or indicates NC deactivation, performing, by the terminal device, NC deactivation; if the NC state information represents or indicates NC activation, generating or transmitting, by the terminal device, a data packet corresponding to NC activation; if the NC state information represents or indicates NC deactivation, generating or transmitting, by the terminal device, a data packet corresponding to NC deactivation; if the NC state information represents or indicates NC activation, considering NC as being active or determining NC as being active; or if the NC state information represents or indicates NC deactivation, considering NC as being inactive or determining NC as being inactive.

In at least one embodiment, based on the first information, the terminal device may determine NC activation or deactivation, or consider NC as being active or inactive.

The method 500 may further include step S530 and step 540, and details are as follows.

In step S530, the terminal device determines an NC state change and/or an NC state change result.

In some possible implementations, the network device may send second information to the terminal device; and accordingly, the terminal device may determine the NC state change and/or the NC state change result based on the second information. The second information may be used to indicate NC activation or NC deactivation. In at least one embodiment, the second information may be carried in a radio resource control (radio resource control, RRC) message, a media access control control element (media access control control element, MAC CE), or downlink control information (downlink control information, DCI).

In at least one embodiment, the second information may include at least one of the following granularities: bearer (per bearer), user plane bearer (per (data radio bearer, DRB)), packet data convergence protocol PDCP entity (per PDCP entity), radio link control RLC entity (per RLC entity), NC entity (per NC entity), media access control MAC entity (per MAC entity), or terminal device.

In at least one embodiment, the second information carries at least one of the following: an NC state change indication, a user plane bearer indication, a media access control MAC entity index (MAC entity index) indication, a packet data convergence protocol PDCP entity index (PDCP entity index) indication, a radio link control RLC entity index (RLC entity index) indication, activation indication information, deactivation indication information, or the NC state change result.

In at least one embodiment, the second information may be determined by the network device based on third information, and the third information may include at least one of the following: channel quality, a quality of service (quality of service, QoS) requirement, a quantity of retransmissions, a bandwidth, a channel capacity, a bit error rate, a frequency band, or application layer information.

In some possible implementations, the terminal device may determine the NC state change and/or the NC state change result based on fourth information. The fourth information may include at least one of the following: channel quality, a quality of service QoS requirement, a quantity of retransmissions, a bandwidth, a channel capacity, a bit error rate, a frequency band, or application layer information.

In at least one embodiment, in a case that the second information sent by the network device is received by the terminal device, the terminal device may determine the NC state change and/or the NC state change result based on the second information and the fourth information.

Further, the terminal device may send fifth information to the network device. The fifth information is used to indicate the NC state change and/or the NC state change result of the terminal device. In at least one embodiment, the fifth information is carried in a radio resource control RRC message, a media access control control element MAC CE or uplink control information (uplink control information, UCI). In at least one embodiment, the fifth information may include at least one of the following granularities: per bearer, per user plane bearer, per packet data convergence protocol PDCP entity, per radio link control RLC entity, per NC entity, per media access control MAC entity, or per terminal device. In at least one embodiment, the fifth information may carry at least one of the following: an NC state change indication, a user plane bearer indication, a media access control MAC entity index indication, a packet data convergence protocol PDCP entity index indication, a radio link control RLC entity index indication, activation indication information, deactivation indication information, or the NC state change result.

In step S540, the terminal device performs a second operation based on a changed NC state.

The second operation may include at least one of the following: performing an NC operation, performing NC activation, or performing NC deactivation. The NC operation may include at least one of the following: obtaining NC input information, generating a data packet, transmitting a data packet, rolling back to duplicate transmission, generating an NC packet, outputting NC output information, performing data segmentation, or executing an NC algorithm.

For example, the terminal device performing a second operation based on a changed NC state may include at least one of the following:
if the NC state is changed to NC activation, performing, by the terminal device, NC activation and/or an NC operation; if the NC state is changed to NC deactivation, performing, by the terminal device, NC deactivation; if the NC state is changed to NC activation, generating or transmitting, by the terminal device, a data packet corresponding to NC activation; if the NC state is changed to NC deactivation, generating or transmitting, by the terminal device, a data packet corresponding to NC deactivation; if the NC state is changed to NC activation, determining, by the terminal device, NC input information and/or NC output information corresponding to NC activation; if the NC state is changed to NC deactivation, determining, by the terminal device, NC input information and/or NC output information corresponding to NC deactivation; or if the NC state is changed to NC deactivation, determining, by the terminal device, NC input information and/or NC output information.

In this embodiment of the present application, in some possible implementations, a protocol stack architecture may be preconfigured for the terminal device or the network device, and regardless of NC activation or deactivation, a data packet needs to be transmitted through the NC layer or the NC entity. In this way, it is unnecessary to introduce a plurality of protocol stack architectures, thereby simplifying processing during the transmission of the data packet.

In at least one embodiment, in cases of NC activation and NC deactivation, NC processing to be performed may be at least partially the same, or NC processing to be performed may be different.

For example, the terminal device includes a first protocol stack architecture, and the first protocol stack architecture includes an NC entity or an NC layer. In at least one embodiment, the first protocol stack architecture may be the protocol stack architecture shown in FIG. 2 or FIG. 3, or the first protocol stack architecture may alternatively be the protocol stack architecture shown in FIG. 4. An NC sublayer, an NC function, an NC algorithm, or an NC entity may be established within a protocol layer in the protocol stack, or an NC sublayer, an NC function, an NC algorithm, or an NC entity may be added to a protocol entity in the protocol stack. In this case, during data transmission, the terminal device may submit a data packet to the NC entity or the NC layer.

In at least one embodiment, in the case of the NC state change, the terminal device may use a first protocol stack architecture, or maintain a first protocol stack architecture unchanged, where the first protocol stack architecture may include an NC entity or an NC layer.

In at least one embodiment, an NC operation may be performed by using the NC entity or the NC layer, where the NC operation includes at least one of the following: obtaining NC input information, generating a data packet, transmitting a data packet, rolling back to duplicate transmission, generating an NC packet, outputting NC output information, performing data segmentation, or executing an NC algorithm.

The NC input information may include at least one of the following granularities: a bearer, a packet data convergence protocol PDCP entity, a radio link control RLC entity, an NC entity, a terminal device, or a cell.

The data packet or the NC packet may include NC information or NC state information. In at least one embodiment, the data packet or the NC packet may include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, or whether to perform an NC operation or NC activation or NC deactivation.

In at least one embodiment, in the case of NC activation, NC segmentation and NC packet padding are performed by using the NC entity or the NC layer. In at least one embodiment, a first value may be carried in one of a data packet header, a data packet, an NC packet header, or an NC packet, where the first value may be an actual value, a non-special value, a non-default value, or a non-all-zero value. In this case, NC activation may be determined based on the first value. Further, in the case of NC activation, at least one of the quantity of data streams supported by the NC, the quantity of data packets supported by the NC, or the quantity of NC segments may be greater than 1.

In at least one embodiment, in the case of NC activation, the data packet or the NC packet may include NC information or NC state information. In at least one embodiment, the data packet or the NC packet may include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, or whether to perform an NC operation or NC activation or NC deactivation.

In at least one embodiment, in the case of NC deactivation, at least one of the following operations may be performed by using the NC entity or the NC layer: skipping performing NC segmentation, skipping performing NC packet padding, using identification information of default encoding configuration information, or skipping performing NC coding. In at least one embodiment, a second value may be carried in one of a data packet header, a data packet, an NC packet header, or an NC packet, where the second value may be a special value, a default value, or an all-zero value. In this case, NC deactivation may be determined based on the second value. Further, in the case of NC deactivation, at least one of the quantity of data streams supported by the NC, the quantity of data packets supported by the NC, or the quantity of NC segments may be equal to 1.

In at least one embodiment, in the case of NC deactivation, the data packet or the NC packet may not include NC information or NC state information. In at least one embodiment, the data packet or the NC packet may not include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, or whether to perform an NC operation or NC activation or NC deactivation.

In at least one embodiment, in the case of an NC change, sequence numbers (sequence numbers, SNs) of NC packets or data packets may be consecutive or inconsecutive. For example, an NC packet subsequent to NC deactivation may use a sequence number SN that is consecutive to that of an NC packet prior to the deactivation, or a data packet subsequent to NC deactivation may use an SN that is consecutive to that of a data packet prior to the deactivation, or a data packet for NC deactivation and a data packet for NC activation may use consecutive SNs. For another example, an NC packet subsequent to NC activation may use a sequence number SN that is consecutive to that of an NC packet prior to the activation, or a data packet subsequent to NC activation may use an SN that is consecutive to that of a data packet prior to the activation, or a data packet for NC deactivation and a data packet for NC activation may use consecutive SNs.

In at least one embodiment, in the case of NC deactivation, the NC entity or the NC layer, serving as an NC transmitting end, may perform at least one of the following operations on a data packet that is prior to NC deactivation; and/or
in the case of NC activation, the NC entity or the NC layer, serving as an NC transmitting end, may perform at least one of the following operations on a data packet that is prior to NC activation:
(further, for other existing protocol stacks, such as RLC and PDCP, in the case of NC activation and/or deactivation, the corresponding sending entity may perform at least one of the following operations on a data packet that is prior to an NC state change:)
deleting all stored data packets; deleting at least one of the following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of the following data packets: an unsent data packet, a data packet without an acknowledgment ACK feedback, a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; or deleting an NC entity or an NC layer corresponding to the data packet.

In at least one embodiment, in the case of NC deactivation, the NC entity or the NC layer, serving as an NC receiving end, performs at least one of the following operations on a data packet that is prior to NC deactivation; and/or
in the case of NC activation, the NC entity or the NC layer, serving as an NC receiving end, may perform at least one of the following operations on a data packet that is prior to NC activation:
(further, for other existing protocol stacks, such as RLC and PDCP, in the case of NC activation and/or deactivation, the corresponding receiving entity may perform at least one of the following operations on a data packet that is prior to an NC state change:)
deleting all data packets that have not been submitted to a higher layer; submitting a corresponding data packet to a higher layer after performing NC coding; deleting an NC entity corresponding to the data packet; or indicating a data packet receiving result to a peer end. The process of indicating a data packet receiving result to a peer end may include: indicating, to the peer end, whether the data packet is correctly received. The data packet may refer to a data packet that is prior to NC deactivation.

In this embodiment of this application, in some possible implementations, it is possible to support or preconfigure a plurality of (or at least one) protocol stack architectures for the terminal device or the network device. In a case that the NC layer (or the NC entity) is active, one protocol stack architecture (for example, the protocol stack architecture shown in FIG. 2 or FIG. 3, or the protocol stack architecture shown in FIG. 4 may be used. In this case, an NC sublayer, an NC function, an NC algorithm, or an NC entity may be established within a protocol layer in the protocol stack, or an NC sublayer, an NC function, an NC algorithm, or an NC entity may be added to a protocol entity in the protocol stack) of the plurality of protocol stack architectures is used. In a case that the NC layer (or the NC entity) is inactive, another (for example, the protocol stack architecture shown in FIG. 4) of the plurality of protocol stack architectures is used. In this way, in a case that the NC layer (or the NC entity) is inactive, a data packet is unnecessary to be transmitted through the NC layer or the NC entity (the data packet needs to be transmitted through the NC layer or the NC entity in a case that the NC layer (or the NC entity) is active), thereby improving transmission efficiency of the system.

In at least one embodiment, in cases of NC activation and NC deactivation, NC processing to be performed may be different.

For example, the terminal device may include a first protocol stack architecture and a second protocol stack architecture, the first protocol stack architecture includes an NC entity or an NC layer, and the second protocol stack architecture does not include an NC entity or an NC layer. In at least one embodiment, the first protocol stack architecture may be the protocol stack architecture shown in FIG. 2 or FIG. 3, and the second protocol stack architecture may be the protocol stack architecture shown in FIG. 4.

In at least one embodiment, in the case of the NC state change, the terminal device may use the first protocol stack architecture or the second protocol stack architecture, or the terminal device performs changes the first protocol stack architecture or the second protocol stack architecture.

In at least one embodiment, the data packet or the NC packet may not include NC information or NC state information. In at least one embodiment, the data packet or the NC packet may not include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information. In at least one embodiment, a first value may be not carried in one of a data packet header, a data packet, an NC packet header, or an NC packet, where the first value may be an actual value, a non-special value, a non-default value, or a non-all-zero value.

In at least one embodiment, in the case of NC activation, the data packet or the NC packet may include NC information or NC state information. In at least one embodiment, the data packet or the NC packet may include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information. In at least one embodiment, a first value may be carried in one of a data packet header, a data packet, an NC packet header, or an NC packet, where the first value may be an actual value, a non-special value, a non-default value, or a non-all-zero value.

In at least one embodiment, in the case of NC deactivation, the data packet or the NC packet may not include NC information or NC state information. In at least one embodiment, the data packet or the NC packet may not include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information. In at least one embodiment, a first value may be not carried in one of a data packet header, a data packet, an NC packet header, or an NC packet. In at least one embodiment, the first value may be an actual value, a non-special value, a non-default value, or a non-all-zero value.

In at least one embodiment, in the case of an NC change, sequence numbers (sequence numbers, SNs) of NC packets or data packets may be consecutive or inconsecutive. For example, an NC packet subsequent to NC deactivation may use a sequence number SN that is consecutive to that of an NC packet prior to the deactivation, or a data packet subsequent to NC deactivation may use an SN that is consecutive to that of a data packet prior to the deactivation, or a data packet for NC deactivation and a data packet for NC activation may use consecutive SNs. For another example, an NC packet subsequent to NC activation may use a sequence number SN that is consecutive to that of an NC packet prior to the activation, or a data packet subsequent to NC activation may use an SN that is consecutive to that of a data packet prior to the activation, or a data packet for NC deactivation and a data packet for NC activation may use consecutive SNs, or a data packet for NC activation and a data packet for NC deactivation may use consecutive SNs.

In at least one embodiment, in the case of NC activation, the terminal device may perform at least one of the following:
adding or maintaining an NC entity or an NC layer; using the first protocol stack architecture or changing to the first protocol stack architecture; or submitting a data packet to an NC entity or an NC layer.

In at least one embodiment, an NC operation may be performed by using the NC entity or the NC layer, where the NC operation may include at least one of the following: obtaining NC input information, generating an NC packet, generating a data packet corresponding to NC activation, transmitting a data packet corresponding to NC activation, transmitting an NC packet, outputting NC output information, performing data segmentation, performing NC packet padding, or executing an NC algorithm.

In at least one embodiment, the NC input information includes at least one of the following granularities: a bearer, a packet data convergence protocol PDCP entity, a radio link control RLC entity, an NC entity, a terminal device, or a cell.

The data packet or the NC packet may include NC information or NC state information. In at least one embodiment, the data packet or the NC packet includes at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

In at least one embodiment, in the case of NC activation, NC segmentation and NC packet padding may be performed by using the NC entity or the NC layer. In at least one embodiment, a first value may be carried in one of a data packet header, a data packet, an NC packet header, or an NC packet, where the first value may be an actual value, a non-special value, a non-default value, or a non-all-zero value. In this case, NC activation may be determined based on the first value. Further, in the case of NC activation, at least one of the quantity of data streams supported by the NC, the quantity of data packets supported by the NC, or the quantity of NC segments may be greater than 1.

In at least one embodiment, in the case of NC deactivation, the method further includes: performing, by the terminal device, at least one of the following:
deleting or suspending (suspend) an NC entity or an NC layer; using the second protocol stack architecture or changing to the second protocol stack architecture; skipping transmitting a data packet through an NC entity or an NC layer, or skipping submitting a data packet to an NC entity or an NC layer; skipping generating an NC packet; skipping adding an NC packet header to a data packet; skipping adding NC information to a data packet; skipping adding NC state information to a data packet; or skipping performing an NC operation;
in the case of NC deactivation, the NC entity or the NC layer, serving as an NC transmitting end, may perform at least one of the following operations on a data packet that is prior to NC deactivation. (Further, for other existing protocol stacks, such as RLC and PDCP, in the case of NC deactivation, the corresponding sending entity may perform at least one of the following operations on a data packet that is prior to NC deactivation:)
deleting all stored data packets; deleting at least one of the following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of the following data packets: an unsent data packet, a data packet without an acknowledgment ACK feedback, a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; or deleting an NC entity or an NC layer corresponding to the data packet;
in the case of NC deactivation, the NC entity or the NC layer, serving as an NC receiving end, may perform at least one of the following operations on a data packet that is prior to NC deactivation. (Further, for other existing protocol stacks, such as RLC and PDCP, in the case of NC deactivation, the corresponding receiving entity may perform at least one of the following operations on a data packet that is prior to NC deactivation:)
deleting all data packets that have not been submitted to a higher layer; submitting a corresponding data packet to a higher layer after performing NC coding; deleting an NC entity corresponding to the data packet; or indicating a data receiving result to a peer end.

In at least one embodiment, in the case of NC activation, for existing protocol stacks, such as RLC and PDCP, the corresponding sending entity may perform at least one of the following operations on a data packet that is prior to NC activation:
deleting all stored data packets; deleting at least one of the following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of the following data packets: an unsent data packet, a data packet without an acknowledgment ACK feedback, a data packet for which successful sending is not confirmed, or all data packets; performing NC rollback operation on, and/or submitting, to a lower layer, a data packet for which an NC operation has been performed before NC activation; performing data sending for a data packet for which an NC operation has been performed before NC activation or a data packet that has been submitted to a lower layer; or establishing an NC entity or layer or function corresponding to the data packet.

In at least one embodiment, in the case of NC activation, for existing protocol stacks, such as RLC and PDCP, the corresponding receiving entity may perform at least one of the following operations on a data packet that is prior to NC activation:
deleting all data packets that have not been submitted to a higher layer; submitting a corresponding data packet to a higher layer after performing NC coding; establishing an NC entity or layer or function corresponding to the data packet; or indicating a data receiving result to a peer end.

In embodiments of this application, a terminal device performs a first operation based on NC configuration information, NC input information, and/or NC state information of the terminal device, to achieve an NC function in a communication system.

FIG. 6 is a schematic flowchart of a communication method according to an embodiment of this application. A method 600 shown in FIG. 6 may include steps S610 to S630, and details are as follows.

In step S610, a network device (for example, a gNB) sends configuration information to UE.

The configuration information may include at least one of the following: NC configuration information (NC config), NC state information, and NC input information (input).

In at least one embodiment, the NC configuration information may be indicated to the UE through an RRC reconfiguration message.

The NC config may include but is not limited to at least one of the following: a used coding profile id, a maximum quantity L of supported segments, a quantity of supported NC data streams, a quantity N of data packet processing channels (two or more data NC channels), or an NC algorithm. L and N are integers. In at least one embodiment, the NC config may be an optional configuration. In at least one embodiment, the NC config may be a predefined configuration. In at least one embodiment, the NC config may be per bearer, per PDCP entity, per RLC entity, per NC entity, per UE, or cell common.

In at least one embodiment, the NC config may not be configured by a network but is predefined (for example, specified by a protocol).

The NC state information may be default or initial state information. For example, the default or initial state information may indicate NC activation or NC deactivation.

In step S620, the UE configures an NC entity (entity) or an NC layer or performs NC activation/deactivation based on the configuration information.

In at least one embodiment, if configured NC default or initial state information is deactivation, an NC deactivation function or operation is performed.

In at least one embodiment, if configured NC default or initial state information is activation, an NC activation function or operation is performed.

In at least one embodiment, the NC layer or the NC entity (entity) may include one NC entity (instance), or may include at most one NC sending entity (instance) and one NC receiving entity (instance).

In at least one embodiment, the NC layer or the NC entity may include an NC sending and NC receiving function, or a network encoding function and network decoding function.

An NC protocol function is applied to a data packet; or for a sending function, the NC protocol function is applied to a data packet received by an upper layer, or a data part of the data packet; or for a receiving function, the NC protocol function is applied to a data packet received from a lower layer, or a data part of the data packet. In at least one embodiment, a PDCP packet data unit (packet data unit, PDU) is a PDCP data PDU. In at least one embodiment, the PDCP PDU carries at least one of the following indications: an SN number, or whether to perform an NC operation on the packet.

In at least one embodiment, the NC entity or the NC instance performs at least one of the following operations:
obtaining an NC input, outputting NC output information (output), performing segmentation (reassembly or cascading), or executing an NC algorithm.

In at least one embodiment, at least one of the NC inputs may be determined by an NC protocol function, or configured by a network device, or predefined. In at least one embodiment, the NC input may be per bearer, per PDCP entity/RLC entity, per NC entity, per UE, or cell common.

In at least one embodiment, the NC packet carries one of the following information indications: a maximum quantity L of supported segments, a quantity of supported NC data streams, a quantity N of data packet processing channels, a coding profile id, whether to perform NC segmentation, a number of NC segments, whether a segment being a first NC segment, whether a segment being a last NC segment (In at least one embodiment, for data before the NC protocol function), whether to carry padding, a length of padding, an SN, whether the packet being used to perform an NC operation or NC activation/deactivation.

In step S630, the UE performs an NC operation or performs NC activation/deactivation based on the change of NC activation or deactivation.

Step 630 may be implemented in the following manner.
1. The UE receives indication information from a network, where the indication information is used to indicate NC activation or deactivation. In at least one embodiment, the indication information implements indication through RRC/MAC CE/DCI. The indication information implements indication per bearer, per DRB, per PDCP entity/RLC entity, per NC entity, per UE, or per MAC entity. The indication information carries at least one of the following: a change indication, a DRB indication, a MAC entity index indication, or an RLC/PDCP index indication. The network device determines NC activation or deactivation based on first information, where the first information is, for example, channel quality, a QoS requirement, or retransmission statistics.
2. The UE autonomously determines the change of NC activation or deactivation. In at least one embodiment, in a case that the UE determines the change of NC activation or deactivation, change information is indicated to a base station or a peer end entity through second indication information. In at least one embodiment, the indication information implements indication through RRC/MAC CE/UCC. The indication information implements indication per bearer, per DRB, per PDCP entity/RLC entity, per NC entity, per UE, or per MAC entity. The indication information carries at least one of the following: a change indication, a DRB indication, a MAC entity index indication, or an RLC/PDCP index indication. The UE determines NC activation or deactivation based on first information, where the first information is, for example, channel quality, a QoS requirement, or retransmission statistics. In at least one embodiment, a manner of the determining by the UE may be used in combination with a manner of indication by the NW, or an NC state may be changed depending only on the indication by the NW or determination from the UE. In at least one embodiment, when the manner of determining by the UE may be used in combination with the manner of indication by the NW, the indication by the NW takes precedence over the determining by the UE.
3. If NC activation/deactivation is changed to activation, the UE performs an NC activation function or operation.
4. If NC activation/deactivation is changed to deactivation, the UE performs an NC deactivation function or operation.

In the foregoing embodiment, the activation/deactivation manner of the NC layer or the NC entity is provided to define an implementation of the NC function.

In some implementations of embodiments of this application, an NC operation is performed in a case that the NC layer or entity is active/inactive. A difference between operations for activation and deactivation lies in different NC parameters or NC inputs used. Accordingly, regardless of NC activation or deactivation, a data packet is transmitted through the NC layer or entity. The following embodiment is described by using uplink as an example, but is also applicable to downlink.

In at least one embodiment, if the NC layer or the NC entity is active, the UE may perform at least one of the following operations 1 to 5.
1. The UE submits a data packet to the NC layer. For a transmitting end: data is received from an upper layer and sent to a lower layer. For a receiving end: data is received from a lower layer and sent to a higher layer.
2. The NC layer/entity or the NC instance performs at least one of the following operations:
   obtaining an NC input, outputting an NC output, performing segmentation (reassembly or cascading), or executing an NC algorithm.

In at least one embodiment, at least one of the NC inputs may be determined by an NC protocol function, or configured by a network, or predefined.

The NC input is per bearer, per PDCP entity/RLC entity, per NC entity, per UE, or cell common.

3. The NC packet carries one of the following information indications: a maximum quantity L of supported segments, a quantity of supported NC data streams, a quantity N of data packet processing channels, a coding profile id, whether to perform NC segmentation, a number of NC segments, whether a segment being a first NC segment, whether a segment being a last NC segment (in at least one embodiment, for data before the NC protocol function), whether to carry padding, a length of padding, an SN, whether the packet being used to perform an NC operation or NC activation/deactivation.

4. Generally, in a case that N>1, NC segmentation is performed, or padding (padding) is performed.

5. The UE generates an NC packet carrying an NC packet header.

In at least one embodiment, information carried in the NC packet header is an actual value, a non-special value, a non-default value, or a non-all-zero value.

In at least one embodiment, if the NC layer or the NC entity is inactive, the UE performs at least one of the following operations 1 to 6.
1. The UE submits a data packet to the NC layer. For a transmitting end: data is received from an upper layer and sent to a lower layer. For a receiving end: data is received from a lower layer and sent to a higher layer.
2. The NC layer/entity or the NC instance performs at least one of the following operations:
   obtaining an NC input, outputting an NC output, performing segmentation (reassembly or cascading), or executing an NC algorithm.

In at least one embodiment, at least one of the NC inputs may be determined by an NC protocol function, or configured by a network, or predefined.

The NC input is per bearer, per PDCP entity/RLC entity, per NC entity, per UE, or cell common.

3. The NC packet carries one of the following information indications: L, N, a coding profile id, whether to perform NC segmentation, a number of NC segments, whether a segment being a first NC segment, whether a segment being a last NC segment (in at least one embodiment, for data before the NC protocol function), whether to carry padding, a length of padding, an SN, whether the packet being used to perform an NC operation or NC activation/deactivation.

4. Usually, in a case that N=1, the UE skips performing NC, skips performing padding, uses a default coding profile id, or skips performing NC coding.

5. The UE generates an NC packet. In at least one embodiment, an NC packet header is carried, but information carried in the NC packet header is a special value, a default value, or an all-zero value. A packet subsequent to deactivation uses an SN that is consecutive to and subsequent to that of an NC packet prior to the deactivation.

6. In a case that the NC layer is inactive, at least one of the following is included:

The NC entity, or the NC transmitting end performs at least one of the following operations on a packet that is prior to deactivation:
deleting all stored packets (including PDUs and SDUs), or instructing a lower layer to delete a data packet, where the data packet may be at least one of the following: an unsent data packet, a data packet without an ACK feedback, a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; indicating an end-marker to a peer end, to indicate the start of NC deactivation or indicate a packet from which NC deactivation starts; (accordingly, the end-marker is carried in a new NC packet (a last one); in at least one embodiment, this packet carries an SN indication of a last NC packet); or deleting a corresponding NC entity (or the UE deletes the corresponding NC entity).

The NC entity, or the NC receiving end performs at least one of the following operations on a packet that is prior to deactivation:
deleting all packets that have not been submitted to a higher layer, or submitting corresponding data packets (SDUs) to a higher layer in order after executing NC. In at least one embodiment, all packets that have not been submitted to a higher layer are deleted in response to the end-marker indication, or corresponding data packets are submitted to a higher layer in order after NC is executed, optionally after the end-marker indication is received, or after all packets indicated by the end-marker are processed; or
deleting a corresponding NC entity (or the UE deletes the corresponding NC entity). In at least one embodiment, the NC entity is deleted in response to the end-marker indication, optionally after the end-marker indication is received, or after all packets indicated by the end-marker are processed.

In the foregoing embodiment, the UE and the network device may use the protocol stack architecture shown in FIG. 2 or FIG. 3.

In the foregoing embodiment, the NC activation/deactivation operation may be provided. In this way, the data packet always needs to be submitted to the NC layer to perform related processing. However, it is unnecessary to introduce a new protocol layer architecture.

In some implementations of embodiments of this application, an NC operation is performed in a case that the NC layer or entity is active/inactive. A difference between operations for activation and deactivation lies in that different protocol stack architectures are used in the case of NC activation/deactivation. Specifically, a data packet is unnecessary be submitted to the NC layer when the NC is inactive, and needs to be submitted to the NC layer only when the NC is active. The following embodiment is described by using uplink as an example, but is also applicable to downlink.

In at least one embodiment, if the NC layer or the NC entity is active, the UE performs at least one of the following operations 1 to 7.
1. The UE adds or maintains an NC layer or an NC entity.
2. The UE uses protocol stack architecture 1 or changes to protocol stack architecture 1. Protocol stack architecture 1 may be shown in FIG. 2 or FIG. 3.

In at least one embodiment, the architecture includes an NC layer or an NC entity.

In at least one embodiment, the architecture is an NC protocol stack architecture including an NC layer or an NC entity, or an enhanced architecture of an existing NC protocol stack architecture.

3. The UE submits a data packet to the NC layer. For a transmitting end: data is received from an upper layer and sent to a lower layer. For a receiving end: data is received from a lower layer and sent to a higher layer.

4. The NC layer/entity or the NC instance performs at least one of the following operations:
obtaining an NC input, outputting an NC output, performing segmentation (reassembly or cascading), or executing an NC algorithm.

In at least one embodiment, at least one of the NC inputs may be determined by an NC protocol function, or configured by a network, or predefined.

The NC input is per bearer, per PDCP entity/RLC entity, per NC entity, per UE, or cell common.

5. The NC packet carries one of the following information indications: L, N, a coding profile id, whether to perform NC segmentation, a number of NC segments, whether a segment being a first NC segment, whether a segment being a last NC segment (in at least one embodiment, for data before the NC protocol function), whether to carry padding, a length of padding, an SN, whether the packet being used to perform an NC operation or NC activation/deactivation.

6. Generally, in a case that N>1, NC segmentation is performed, or padding is performed.

7. The UE generates an NC packet carrying an NC packet header.

In at least one embodiment, if the NC layer or the NC entity is inactive, the UE performs at least one of the following operations 1 to 5.
1. The UE deletes an NC layer or an NC entity.
2. The UE uses protocol stack architecture 2 or changes to protocol stack architecture 2.

In at least one embodiment, the architecture does not include an NC layer or an NC entity.

In at least one embodiment, the architecture is an existing NC protocol stack architecture.

3. The UE skips transmitting a data packet through the NC layer or skips submitting a data packet to the NC layer.

In at least one embodiment, the NC layer/entity does not exist.

In at least one embodiment, as a transmitting end, the UE skips the NC layer, receives data from an upper layer, and sends the data to a lower layer.

In at least one embodiment, as a receiving end, the UE skips the NC layer, receives data from a lower layer, and sends the data to a higher layer.

4. The UE skips generating an NC packet, and skips adding an NC packet header to the NC packet.

5. In at least one embodiment, in a case that the NC layer is inactive, at least one of the following is included:

The NC entity, or the NC transmitting end performs at least one of the following:
deleting all stored packets (including PDUs and SDUs);
instructing a lower layer to delete a data packet, where the data packet may include at least one of the following: an unsent data packet, a data packet without an ACK feedback, a data packet for which successful sending is not confirmed, or all data packets;
performing NC rollback operation on, and/or submitting, to a lower layer, a data packet for which an NC operation has been performed before NC deactivation;
performing data sending for a data packet for which an NC operation has been performed before NC deactivation or a data packet that has been submitted to a lower layer; or indicating an end-marker to a peer end, to indicate the start of NC deactivation or indicate a packet from which NC deactivation starts; (accordingly, the end-marker is carried in a new NC packet (a last one); optionally, this packet carries an SN indication of a last NC packet); or
deleting a corresponding NC entity (or the UE deletes the corresponding NC entity).

The NC entity, or the NC receiving end performs at least one of the following operations:
deleting all packets that have not been submitted to a higher layer, or submitting corresponding data packets (SDUs) to a higher layer in order after executing NC. In at least one embodiment, all packets that have not been submitted to a higher layer are deleted, or corresponding data packets are submitted to a higher layer in order after NC is executed, in response to the end-marker indication; optionally after the end-marker indication is received, or after all packets indicated by the end-marker are processed; or
deleting a corresponding NC entity (or the UE deletes the corresponding NC entity). In at least one embodiment, the NC entity is deleted in response to the end-marker indication, optionally after the end-marker indication is received, or after all packets indicated by the end-marker are processed.

In the foregoing embodiment, the UE and the network device may use the protocol stack architecture shown in FIG. 2 or FIG. 3 in the case of activation, and may use the protocol stack architecture shown in FIG. 4 in the case of deactivation.

In the foregoing embodiment, the NC activation/deactivation operation may be provided. Compared with the above Embodiment, in this manner, a data packet is unnecessary to be submitted to the NC layer when the NC is inactive, and needs to be submitted to the NC layer only when the NC is active. That is, different protocol stack architectures are used in the case of NC activation/deactivation.

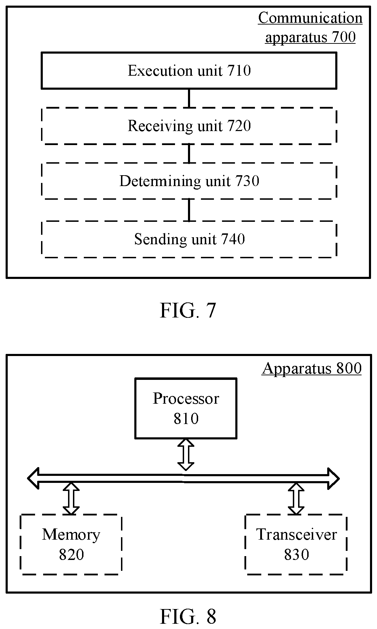

The method embodiments of this application are described in detail above with reference to FIG. 1 to FIG. 6. Apparatus embodiments of this application are described in detail below with reference to FIG. 7 and FIG. 8. It should be understood that the description of the method embodiments corresponds to the description of the apparatus embodiments, and therefore, for parts that are not described in detail, reference may be made to the foregoing method embodiments.

FIG. 7 is a schematic diagram of a structure of a communication apparatus according to an embodiment of this application. As shown in FIG. 7, the apparatus 700 includes:
an execution unit 710, configured to perform a first operation based on first information, where the first information includes network coding NC configuration information, NC input information, and/or NC state information of the apparatus, the NC state information indicates NC activation or NC deactivation, and the first operation includes at least one of the following: configuring an NC entity, configuring an NC layer, performing NC activation or NC deactivation, generating a data packet, transmitting a data packet, determining NC as being active, or determining NC as being inactive.

In at least one embodiment, the apparatus further includes a receiving unit 720, configured to receive first information sent or indicated by a network device.

In at least one embodiment, at least one of the NC configuration information, the NC input information, or the NC state information is predefined.

In at least one embodiment, the NC configuration information includes at least one of the following: identification information of coding configuration information, a quantity of segments supported by the NC, a quantity of data streams supported by the NC, a quantity of data packets supported by the NC, or an NC algorithm.

In at least one embodiment, at least one of the NC configuration information, the NC input information, or the NC state information includes at least one of the following granularities: per bearer, per packet data convergence protocol PDCP entity, per radio link control RLC entity, per NC entity, per terminal device, or per cell.

In at least one embodiment, the execution unit 710 is configured to perform at least one of the following: if the NC state information represents or indicates NC activation, performing NC activation; if the NC state information represents or indicates NC deactivation, performing NC deactivation; if the NC state information represents or indicates NC activation, generating or transmitting a data packet corresponding to NC activation; if the NC state information represents or indicates NC deactivation, generating or transmitting a data packet corresponding to NC deactivation; if the NC state information represents or indicates NC activation, considering NC as being active or determining NC as being active; or if the NC state information represents or indicates NC deactivation, considering NC as being inactive or determining NC as being inactive.

In at least one embodiment, the NC entity or the NC layer includes at least one of the following: an NC entity, an NC sending entity and NC receiving entity, an NC sending function and NC receiving function, a network encoding function, or a network decoding function.

In at least one embodiment, the execution unit 710 is further configured to: based on the first information, determine NC activation or deactivation, or consider NC as being active or inactive.

In at least one embodiment, the apparatus further includes a determining unit 730, configured to determine an NC state change and/or an NC state change result; and the execution unit 710 is further configured to perform a second operation based on a changed NC state, where the second operation includes at least one of the following: performing an NC operation, performing NC activation, or performing NC deactivation, and the NC operation includes at least one of the following: obtaining NC input information, generating a data packet, transmitting a data packet, rolling back to duplicate transmission, generating an NC packet, outputting NC output information, performing data segmentation, or executing an NC algorithm.

In at least one embodiment, the apparatus 700 further includes a receiving unit 720, configured to receive second information sent by the network device, where the second information is used to indicate NC activation or NC deactivation; and the determining unit 730 is configured to determine the NC state change and/or the NC state change result based on the second information.

In at least one embodiment, the second information is carried in a radio resource control RRC message, a media access control control element MAC CE, or downlink control information DCI.

In at least one embodiment, the second information may include at least one of the following granularities: per bearer, per user plane bearer, per packet data convergence protocol PDCP entity, per radio link control RLC entity, per NC entity, per media access control MAC entity, or per terminal device.

In at least one embodiment, the second information may carry at least one of the following: an NC state change indication, a user plane bearer indication, a media access control MAC entity index indication, a packet data convergence protocol PDCP entity index indication, a radio link control RLC entity index indication, activation indication information, deactivation indication information, or the NC state change result.

In at least one embodiment, the second information is determined by the network device based on third information, and the third information includes at least one of the following: channel quality, a quality of service QoS requirement, a quantity of retransmissions, a bandwidth, a channel capacity, a bit error rate, a frequency band, or application layer information.

In at least one embodiment, the determining unit 730 is configured to determine the NC state change and/or the NC state change result based on fourth information, where the fourth information includes at least one of the following: channel quality, a quality of service QoS requirement, a quantity of retransmissions, a bandwidth, a channel capacity, a bit error rate, a frequency band, or application layer information.

In at least one embodiment, the determining unit 730 is configured to: in a case that the apparatus receives the second information sent by the network device, determine the NC state change and/or the NC state change result based on the second information and the fourth information.

In at least one embodiment, the apparatus 700 further includes a sending unit 740, configured to send fifth information to the network device, where the fifth information is used to indicate the NC state change and/or the NC state change result of the apparatus.

In at least one embodiment, the fifth information is carried in a radio resource control RRC message, a media access control control element MAC CE, or uplink control information UCI.

In at least one embodiment, the fifth information includes at least one of the following granularities: per bearer, per user plane bearer, per packet data convergence protocol PDCP entity, per radio link control RLC entity, per NC entity, per media access control MAC entity, or per terminal device.

In at least one embodiment, the fifth information carries at least one of the following: an NC state change indication, a user plane bearer indication, a media access control MAC entity index indication, a packet data convergence protocol PDCP entity index indication, a radio link control RLC entity index indication, activation indication information, deactivation indication information, or the NC state change result.

In at least one embodiment, the execution unit 710 is configured to: if the NC state is changed to NC activation, perform NC activation and/or an NC operation; if the NC state is changed to NC deactivation, perform NC deactivation; if the NC state is changed to NC activation, generate or transmit a data packet corresponding to NC activation; if the NC state is changed to NC deactivation, generate or transmit a data packet corresponding to NC deactivation; if the NC state is changed to NC activation, determine NC input information and/or NC output information corresponding to NC activation; if the NC state is changed to NC deactivation, determine NC input information and/or NC output information corresponding to NC deactivation; or if the NC state is changed to NC deactivation, determine NC input information and/or NC output information.

In at least one embodiment, the apparatus includes a first protocol stack architecture, and the first protocol stack architecture includes an NC entity or an NC layer.

In at least one embodiment, the execution unit 710 is further configured to submit a data packet to the NC entity or the NC layer.

In at least one embodiment, the execution unit 710 is further configured to: in the case of the NC state change, use a first protocol stack, or maintain a first protocol stack architecture unchanged, where the first protocol stack architecture includes an NC entity or an NC layer.

In at least one embodiment, the execution unit 710 is further configured to perform an NC operation by using the NC entity or the NC layer, where the NC operation includes at least one of the following: obtaining NC input information, generating a data packet, transmitting a data packet, rolling back to duplicate transmission, generating an NC packet, outputting NC output information, performing data segmentation, or executing an NC algorithm.

In at least one embodiment, the NC input information includes at least one of the following granularities: per bearer, per packet data convergence protocol PDCP entity, per radio link control RLC entity, per NC entity, per terminal device, or per cell.

In at least one embodiment, the data packet or the NC packet includes NC information or NC state information.

In at least one embodiment, the data packet or the NC packet includes at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, or whether to perform an NC operation or NC activation or NC deactivation.

In at least one embodiment, the execution unit 710 is configured to perform NC segmentation and NC packet padding by using the NC entity or the NC layer.

In at least one embodiment, a first value is carried in one of a data packet header, a data packet, an NC packet header, or an NC packet, where the first value is an actual value, a non-special value, a non-default value, or a non-all-zero value.

In at least one embodiment, at least one of the quantity of data streams supported by the NC, the quantity of data packets supported by the NC, or the quantity of NC segments is greater than 1.

In at least one embodiment, the execution unit 710 is configured to perform at least one of the following operations by using the NC entity or the NC layer: skipping performing NC segmentation, skipping performing NC packet padding, using identification information of default encoding configuration information, or skipping performing NC coding.

In at least one embodiment, a second value is carried in one of a data packet header, a data packet, an NC packet header, or an NC packet, where the second value is a special value, a default value, or an all-zero value.

In at least one embodiment, at least one of the quantity of data streams supported by the NC, the quantity of data packets supported by the NC, or the quantity of NC segments is equal to 1.

In at least one embodiment, in the case of an NC change, NC packet or data packet SNs are consecutive or inconsecutive.

In at least one embodiment, an NC packet subsequent to NC deactivation uses a sequence number SN that is consecutive to that of an NC packet prior to the deactivation, or a data packet subsequent to NC deactivation uses an SN that is consecutive to that of a data packet prior to the deactivation, or a data packet for NC deactivation and a data packet for NC activation use consecutive SNs.

In at least one embodiment, an NC packet subsequent to NC activation uses a sequence number SN that is consecutive to that of an NC packet prior to the activation, or a data packet subsequent to NC activation uses an SN that is consecutive to that of a data packet prior to the activation, or a data packet for NC deactivation and a data packet for NC activation use consecutive SNs.

In at least one embodiment, the NC entity or the NC layer serves as an NC transmitting end, and the execution unit 710 is configured to perform at least one of the following operations on a data packet that is prior to NC deactivation: deleting all stored data packets; deleting at least one of the following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of the following data packets: an unsent data packet, a data packet without an acknowledgment ACK feedback, a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; or deleting an NC entity or an NC layer corresponding to the data packet.

In at least one embodiment, the NC entity or the NC layer serves as an NC receiving end, and the execution unit 710 is configured to perform at least one of the following operations on a data packet that is prior to NC deactivation: deleting all data packets that have not been submitted to a higher layer; submitting a corresponding data packet to a higher layer after performing NC coding; deleting an NC entity corresponding to the data packet; or indicating a data packet receiving result to a peer end.

In at least one embodiment, the apparatus may include a first protocol stack architecture and a second protocol stack architecture, the first protocol stack architecture includes an NC entity or an NC layer, and the second protocol stack architecture does not include an NC entity or an NC layer.

In at least one embodiment, the execution unit 710 is further configured to: in the case of the NC state change, use the first protocol stack architecture or the second protocol stack architecture, or change the first protocol stack architecture or the second protocol stack architecture.

In at least one embodiment, the execution unit 710 is further configured to perform at least one of the following operations: adding or maintaining an NC entity or an NC layer; using the first protocol stack architecture or changing to the first protocol stack architecture; or submitting a data packet to an NC entity or an NC layer.

In at least one embodiment, the execution unit 710 is further configured to perform an NC operation by using the NC entity or the NC layer, where the NC operation includes at least one of the following: obtaining NC input information, generating an NC packet, generating a data packet corresponding to NC activation, transmitting a data packet corresponding to NC activation, transmitting an NC packet, outputting NC output information, performing data segmentation, performing NC packet padding, or executing an NC algorithm.

In at least one embodiment, the NC input information includes at least one of the following granularities: per bearer, per packet data convergence protocol PDCP entity, per radio link control RLC entity, per NC entity, per terminal device, or per cell.

In at least one embodiment, the data packet or the NC packet includes NC information or NC state information.

In at least one embodiment, the data packet or the NC packet includes at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

In at least one embodiment, the execution unit 710 is configured to perform NC segmentation and NC packet padding by using the NC entity or the NC layer.

In at least one embodiment, a first value is carried in one of a data packet header, a data packet, an NC packet header, or an NC packet, where the first value is an actual value, a non-special value, a non-default value, or a non-all-zero value.

In at least one embodiment, at least one of the quantity of data streams supported by the NC, the quantity of data packets supported by the NC, or the quantity of NC segments is greater than 1.

In at least one embodiment, the execution unit 710 is further configured to perform at least one of the following: deleting or suspending an NC entity or an NC layer; using the second protocol stack architecture or changing to the second protocol stack architecture; skipping transmitting a data packet through an NC entity or an NC layer, or skipping submitting a data packet to an NC entity or an NC layer; skipping generating an NC packet; skipping adding an NC packet header to a data packet; skipping adding NC information to a data packet; skipping adding NC state information to a data packet; or skipping performing an NC operation.

In at least one embodiment, the data packet or the NC packet does not include NC information or NC state information.

In at least one embodiment, the data packet or the NC packet does not include at least one of the following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

In at least one embodiment, a first value is not carried in one of a data packet header, a data packet, an NC packet header, or an NC packet, where the first value is an actual value, a non-special value, a non-default value, or a non-all-zero value.

In at least one embodiment, the NC entity or the NC layer serves as an NC transmitting end, and the execution unit 710 is further configured to perform at least one of the following operations on a data packet that is prior to NC deactivation: deleting all stored data packets; deleting at least one of the following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of the following data packets: an unsent data packet, a data packet without an acknowledgment ACK feedback, a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; or deleting an NC entity or an NC layer corresponding to the data packet.

In at least one embodiment, the NC entity or the NC layer serves as an NC receiving end, and the execution unit 710 is further configured to perform at least one of the following operations on a data packet that is prior to NC deactivation: deleting all data packets that have not been submitted to a higher layer; submitting a corresponding data packet to a higher layer after performing NC coding; deleting an NC entity corresponding to the data packet; or indicating a data receiving result to a peer end.

In at least one embodiment, in the case of an NC change, NC packet or data packet SNs are consecutive or inconsecutive.

In at least one embodiment, an NC packet or a data packet subsequent to NC deactivation uses an SN that is consecutive to that of an NC packet or a data packet prior to the deactivation, an NC packet or a data packet subsequent to NC activation uses an SN that is consecutive to that of an NC packet or a data packet prior to the activation, or a data packet for NC deactivation and a data packet for NC activation use consecutive SNs.

In at least one embodiment, an NC packet or a data packet subsequent to NC deactivation uses an SN that is inconsecutive to that of an NC packet or a data packet prior to the deactivation, an NC packet or a data packet subsequent to NC activation uses an SN that is inconsecutive to that of an NC packet or a data packet prior to the activation, or a data packet for NC deactivation and a data packet for NC activation use consecutive SNs.

In at least one embodiment, in the case of an NC change, the execution unit 710 is further configured to: perform SN initialization, or use an initialized SN for an NC packet or a data packet.

FIG. 8 is a schematic diagram of a structure of an apparatus according to an embodiment of this application. The dashed lines in FIG. 8 indicate that a unit or module is optional. The apparatus 800 may be configured to implement the methods described in the foregoing method embodiments. The apparatus 800 may be a chip or a communication apparatus.

The apparatus 800 may include one or more processors 810. The processor 810 may allow the apparatus 800 to implement the methods described in the foregoing method embodiments. The processor 810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 800 may further include one or more memories 820. The memory 820 stores a program that may be executed by the processor 810, so that the processor 810 performs the method described in the foregoing method embodiments. The memory 820 may be independent of the processor 810 or may be integrated into the processor 810.

The apparatus 800 may further include a transceiver 830. The processor 810 may communicate with another device or chip through the transceiver 830. For example, the processor 810 may transmit data to and receive data from another device or chip by using the transceiver 830.

An embodiment of this application further provides a computer-readable storage medium for storing a program. The computer-readable storage medium may be applied to a communication apparatus provided in embodiments of this application, and the program causes a computer to perform the methods performed by the communication apparatus in various embodiments of this application.

An embodiment of this application further provides a computer program product. The computer program product includes a program. The computer program product may be applied to a communication apparatus provided in embodiments of this application, and the program causes a computer to perform the methods performed by the communication apparatus in various embodiments of this application.

An embodiment of this application further provides a computer program. The computer program may be applied to a communication apparatus provided in embodiments of this application, and the computer program causes a computer to perform the methods performed by the communication apparatus in various embodiments of this application.

It should be understood that, in the embodiments of this application, "B corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interface, apparatuses or units, and may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When software is used for implementation, the method may be implemented completely or partially in the form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, by a terminal device, a first operation based on first information, wherein the first information comprises network coding NC configuration information, NC input information, and/or NC state information of the terminal device, the NC state information indicates NC activation or NC deactivation, and the first operation comprises at least one of the following: configuring an NC entity, configuring an NC layer, performing NC activation and NC deactivation, generating a data packet, transmitting a data packet, determining NC as being active, or determining NC as being inactive.

2. The method according to claim 1, wherein before the performing, by a terminal device, a first operation based on first information, the method further comprises:
receiving, by the terminal device, the first information sent or indicated by a network device.

3. The method according to claim 1, wherein at least one of the NC configuration information, the NC input information, or the NC state information is predefined.

4. The method according to any one of claims 1 to 3, wherein the NC configuration information comprises at least one of the following:
identification information of coding configuration information, a quantity of segments supported by the NC, a quantity of data streams supported by the NC, a quantity of data packets supported by the NC, or an NC algorithm.

5. The method according to claim 4, wherein at least one of the NC configuration information, the NC input information, or the NC state information comprises at least one of following granularities:
a bearer, a packet data convergence protocol PDCP entity, a radio link control RLC entity, an NC entity, a terminal device, or a cell.

6. The method according to any one of claims 1 to 5, wherein the performing, by a terminal device, a first operation based on first information comprises at least one of following:
if the NC state information represents or indicates NC activation, performing, by the terminal device, NC activation;
if the NC state information represents or indicates NC deactivation, performing, by the terminal device, NC deactivation;
if the NC state information represents or indicates NC activation, generating or transmitting, by the terminal device, a data packet corresponding to NC activation;
if the NC state information represents or indicates NC deactivation, generating or transmitting, by the terminal device, a data packet corresponding to NC deactivation;
if the NC state information represents or indicates NC activation, considering NC as being active or determining NC as being active; or
if the NC state information represents or indicates NC deactivation, considering NC as being inactive or determining NC as being inactive.

7. The method according to any one of claims 1 to 6, wherein the NC entity or the NC layer comprises at least one of following:
an NC entity, an NC sending entity and NC receiving entity, an NC sending function and NC receiving function, a network encoding function, or a network decoding function.

8. The method according to any one of claims 1 to 7, wherein the method further comprises:
determining, by the terminal device based on the first information, NC activation or deactivation, or considering, by the terminal device based on the first information, NC as being active or inactive.

9. The method according to any one of claims 1 to 8, wherein the method further comprises:
determining, by the terminal device, an NC state change and/or an NC state change result; and
performing, by the terminal device, a second operation based on a changed NC state, wherein the second operation comprises at least one of following: performing an NC operation, performing NC activation, or performing NC deactivation, and the NC operation comprises at least one of following: obtaining NC input information, generating a data packet, transmitting a data packet, rolling back to duplicate transmission, generating an NC packet, outputting NC output information, performing data segmentation, or executing an NC algorithm.

10. The method according to claim 9, wherein the determining, by the terminal device, an NC state change and/or an NC state change result comprises:
receiving, by the terminal device, second information sent by the network device, wherein the second information is used to indicate NC activation or NC deactivation; and
determining, by the terminal device based on the second information, the NC state change and/or the NC state change result.

11. The method according to claim 10, wherein the second information is carried in a radio resource control RRC message, a media access control control element MAC CE, or downlink control information DCI.

12. The method according to claim 10 or 11, wherein the second information comprises at least one of following granularities:
a bearer, a user plane bearer, a packet data convergence protocol PDCP entity, a radio link control RLC entity, an NC entity, a media access control MAC entity, or a terminal device.

13. The method according to any one of claims 10 to 12, wherein the second information carries at least one of following:
an NC state change indication, a user plane bearer indication, a media access control MAC entity index indication, a packet data convergence protocol PDCP entity index indication, a radio link control RLC entity index indication, activation indication information, deactivation indication information, or the NC state change result.

14. The method according to any one of claims 10 to 13, wherein the second information is determined by the network device based on third information, and the third information comprises at least one of following: channel quality, a quality of service QoS requirement, a quantity of retransmissions, a bandwidth, a channel capacity, a bit error rate, a frequency band, or application layer information.

15. The method according to any one of claims 9 to 14, wherein the determining, by the terminal device, an NC state change and/or an NC state change result comprises:
determining, by the terminal device, the NC state change and/or the NC state change result based on fourth information, wherein the fourth information comprises at least one of following: channel quality, a quality of service QoS requirement, a quantity of retransmissions, a bandwidth, a channel capacity, a bit error rate, a frequency band, or application layer information.

16. The method according to claim 15, wherein the determining, by the terminal device, the NC state change and/or the NC state change result based on fourth information comprises:
in a case that the terminal device receives the second information sent by the network device, determining, by the terminal device, the NC state change and/or the NC state change result based on the second information and the fourth information.

17. The method according to claim 15 or 16, wherein the method further comprises:
sending, by the terminal device, fifth information to the network device, wherein the fifth information is used to indicate the NC state change and/or the NC state change result of the terminal device.

18. The method according to claim 17, wherein the fifth information is carried in a radio resource control RRC message, a media access control control element MAC CE, or uplink control information UCI.

19. The method according to claim 17 or 18, wherein the fifth information comprises at least one of following granularities:
a bearer, a user plane bearer, a packet data convergence protocol PDCP entity, a radio link control RLC entity, an NC entity, a media access control MAC entity, or a terminal device.

20. The method according to any one of claims 17 to 19, wherein the fifth information carries at least one of following:
an NC state change indication, a user plane bearer indication, a media access control MAC entity index indication, a packet data convergence protocol PDCP entity index indication, a radio link control RLC entity index indication, activation indication information, deactivation indication information, or the NC state change result.

21. The method according to any one of claims 9 to 20, wherein the performing, by the terminal device, a second operation based on a changed NC state comprises:
if the NC state is changed to NC activation, performing, by the terminal device, NC activation and/or an NC operation;
if the NC state is changed to NC deactivation, performing, by the terminal device, NC deactivation;
if the NC state is changed to NC activation, generating or transmitting, by the terminal device, a data packet corresponding to NC activation;
if the NC state is changed to NC deactivation, generating or transmitting, by the terminal device, a data packet corresponding to NC deactivation;
if the NC state is changed to NC activation, determining, by the terminal device, NC input information and/or NC output information corresponding to NC activation;
if the NC state is changed to NC deactivation, determining, by the terminal device, NC input information and/or NC output information corresponding to NC deactivation; or
if the NC state is changed to NC deactivation, determining, by the terminal device, NC input information and/or NC output information.

22. The method according to any one of claims 1 to 21, wherein the terminal device comprises a first protocol stack architecture, and the first protocol stack architecture comprises an NC entity or an NC layer.

23. The method according to any one of claims 1 to 22, wherein the method further comprises:
submitting, by the terminal device, a data packet to the NC entity or the NC layer.

24. The method according to any one of claims 1 to 23, wherein the method further comprises:
in the case of the NC state change, using, by the terminal device, a first protocol stack, or maintaining a first protocol stack architecture unchanged, wherein the first protocol stack architecture comprises an NC entity or an NC layer.

25. The method according to any one of claims 1 to 24, wherein the method further comprises:
performing an NC operation by using the NC entity or the NC layer, wherein the NC operation comprises at least one of following:
obtaining NC input information, generating a data packet, transmitting a data packet, rolling back to duplicate transmission, generating an NC packet, outputting NC output information, performing data segmentation, or executing an NC algorithm.

26. The method according to claim 25, wherein the NC input information comprises at least one of following granularities:
a bearer, a packet data convergence protocol PDCP entity, a radio link control RLC entity, an NC entity, a terminal device, or a cell.

27. The method according to claim 25 or 26, wherein the data packet or the NC packet comprises NC information or NC state information.

28. The method according to any one of claims 25 to 27, wherein the data packet or the NC packet comprises at least one of following information:
a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, or whether to perform an NC operation or NC activation or NC deactivation.

29. The method according to any one of claims 25 to 28, wherein in the case of NC activation, the performing an NC operation by using the NC entity or the NC layer comprises:
performing NC segmentation and NC packet padding by using the NC entity or the NC layer.

30. The method according to claim 29, wherein a first value is carried in one of a data packet header, a data packet, an NC packet header, or an NC packet, wherein the first value is an actual value, a non-special value, a non-default value, or a non-all-zero value.

31. The method according to claim 29 or 30, wherein at least one of the quantity of data streams supported by the NC, the quantity of data packets supported by the NC, or the quantity of NC segments is greater than 1.

32. The method according to any one of claims 25 to 28, wherein in the case of NC deactivation, the NC entity or the NC layer performs at least one of following:
skipping performing NC segmentation, skipping performing NC packet padding, using identification information of default encoding configuration information, or skipping performing NC coding.

33. The method according to claim 32, wherein a second value is carried in one of a data packet header, a data packet, an NC packet header, or an NC packet, wherein the second value is a special value, a default value, or an all-zero value.

34. The method according to claim 32 or 33, wherein at least one of the quantity of data streams supported by the NC, the quantity of data packets supported by the NC, or the quantity of NC segments is equal to 1.

35. The method according to any one of claims 32 to 34, wherein in the case of an NC change, NC packet or data packet sequence numbers SNs are consecutive or inconsecutive.

36. The method according to any one of claims 32 to 35, wherein an NC packet subsequent to NC deactivation uses a sequence number SN that is consecutive to that of an NC packet prior to the deactivation, or a data packet subsequent to NC deactivation uses an SN that is consecutive to that of a data packet prior to the deactivation, or a data packet for NC deactivation and a data packet for NC activation use consecutive SNs.

37. The method according to any one of claims 32 to 35, wherein an NC packet subsequent to NC activation uses a sequence number SN that is consecutive to that of an NC packet prior to the activation, or a data packet subsequent to NC activation uses an SN that is consecutive to that of a data packet prior to the activation, or a data packet for NC deactivation and a data packet for NC activation use consecutive SNs.

38. The method according to any one of claims 32 to 37, wherein in the case of NC deactivation, the NC entity or the NC layer, serving as an NC transmitting end, performs at least one of following operations on a data packet that is prior to NC deactivation:
deleting all stored data packets;
deleting at least one of following data packets at a lower layer: an unsent data packet, a data packet without an acknowledgment ACK feedback, a data packet for which successful sending is not confirmed, or all data packets;
sending a deletion indication to a lower layer;
instructing a lower layer to delete at least one of following data packets: an unsent data packet, a data packet without an acknowledgment ACK feedback, a data packet for which successful sending is not confirmed, or all data packets;
performing NC rollback operation on, and/or submitting, to a lower layer, a data packet for which an NC operation has been performed before NC deactivation;
performing data sending for a data packet for which an NC operation has been performed before NC deactivation or a data packet that has been submitted to a lower layer; or
deleting an NC entity or an NC layer corresponding to the data packet.

39. The method according to any one of claims 32 to 37, wherein in the case of NC deactivation, the NC entity or the NC layer, serving as an NC receiving end, performs at least one of following operations on a data packet that is prior to NC deactivation:
deleting all data packets that have not been submitted to a higher layer;
submitting a corresponding data packet to a higher layer after performing NC coding;
deleting an NC entity corresponding to the data packet; or
indicating a data packet receiving result to a peer end.

40. The method according to any one of claims 1 to 22, wherein the terminal device comprises a first protocol stack architecture and a second protocol stack architecture, the first protocol stack architecture comprises an NC entity or an NC layer, and the second protocol stack architecture does not comprise an NC entity or an NC layer.

41. The method according to claim 40, wherein the method further comprises:
in the case of the NC state change, using, by the terminal device, the first protocol stack architecture or the second protocol stack architecture, or changing, by the terminal device, the first protocol stack architecture or the second protocol stack architecture.

42. The method according to claim 40 or 41, wherein in the case of NC activation, the method further comprises: performing, by the terminal device, at least one of following:
adding or maintaining an NC entity or an NC layer;
using the first protocol stack architecture or changing to the first protocol stack architecture; or
submitting a data packet to an NC entity or an NC layer.

43. The method according to any one of claims 40 to 42, wherein the method further comprises:
performing an NC operation by using the NC entity or the NC layer, wherein the NC operation comprises at least one of following:
obtaining NC input information, generating an NC packet, generating a data packet corresponding to NC activation, transmitting a data packet corresponding to NC activation, transmitting an NC packet, outputting NC output information, performing data segmentation, performing NC packet padding, or executing an NC algorithm.

44. The method according to claim 43, wherein the NC input information comprises at least one of following granularities:
a bearer, a packet data convergence protocol PDCP entity, a radio link control RLC entity, an NC entity, a terminal device, or a cell.

45. The method according to claim 43 or 44, wherein the data packet or the NC packet comprises NC information or NC state information.

46. The method according to claim 43 or 44, wherein the data packet or the NC packet comprises at least one of following information:
a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

47. The method according to any one of claims 40 to 46, wherein in the case of NC activation, the performing an NC operation by using the NC entity or the NC layer comprises:
performing, by using the NC entity or the NC layer, NC segmentation and NC packet padding.

48. The method according to claim 47, wherein a first value is carried in one of a data packet header, a data packet, an NC packet header, or an NC packet, wherein the first value is an actual value, a non-special value, a non-default value, or a non-all-zero value.

49. The method according to claim 47 or 48, wherein at least one of the quantity of data streams supported by the NC, the quantity of data packets supported by the NC, or the quantity of NC segments is greater than 1.

50. The method according to claim 40 or 41, wherein in the case of NC deactivation, the method further comprises: performing, by the terminal device, at least one of following:
deleting or suspending an NC entity or an NC layer;
using the second protocol stack architecture or changing to the second protocol stack architecture;
skipping transmitting a data packet through an NC entity or an NC layer, or skipping submitting a data packet to an NC entity or an NC layer;
skipping generating an NC packet;
skipping adding an NC packet header to a data packet;
skipping adding NC information to a data packet;
skipping adding NC state information to a data packet; or
skipping performing an NC operation.

51. The method according to claim 40 or 41, wherein the data packet or the NC packet does not comprise NC information or NC state information.

52. The method according to claim 40 or 41, wherein the data packet or the NC packet does not comprise at least one of following information:
a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

53. The method according to claim 40 or 41, wherein a first value is not carried in one of a data packet header, a data packet, an NC packet header, or an NC packet, wherein the first value is an actual value, a non-special value, a non-default value, or a non-all-zero value.

54. The method according to any one of claims 50 to 53, wherein in the case of NC deactivation, the NC entity or the NC layer, serving as an NC transmitting end, performs at least one of following operations on a data packet that is prior to NC deactivation:
deleting all stored data packets;
deleting at least one of following data packets at a lower layer: an unsent data packet, a data packet without an acknowledgment ACK feedback, a data packet for which successful sending is not confirmed, or all data packets;
sending a deletion indication to a lower layer;
instructing a lower layer to delete at least one of following data packets: an unsent data packet, a data packet without an acknowledgment ACK feedback, a data packet for which successful sending is not confirmed, or all data packets;
performing NC rollback operation on, and/or submitting, to a lower layer, a data packet for which an NC operation has been performed before NC deactivation;
performing data sending for a data packet for which an NC operation has been performed before NC deactivation or a data packet that has been submitted to a lower layer; or
deleting an NC entity or an NC layer corresponding to the data packet.

55. The method according to any one of claims 50 to 53, wherein in the case of NC deactivation, the NC entity or the NC layer, serving as an NC receiving end, performs at least one of following operations on a data packet that is prior to NC deactivation:
deleting all data packets that have not been submitted to a higher layer;
submitting a corresponding data packet to a higher layer after performing NC coding;
deleting an NC entity corresponding to the data packet; or
indicating a data receiving result to a peer end.

56. The method according to any one of claims 40 to 55, wherein in the case of an NC change, NC packet or data packet SNs are consecutive or inconsecutive.

57. The method according to any one of claims 40 to 56, wherein an NC packet or a data packet subsequent to NC deactivation uses an SN that is consecutive to that of an NC packet or a data packet prior to the deactivation, an NC packet or a data packet subsequent to NC activation uses an SN that is consecutive to that of an NC packet or a data packet prior to the activation, or a data packet for NC deactivation and a data packet for NC activation use consecutive SNs.

58. The method according to any one of claims 40 to 57, wherein an NC packet or a data packet subsequent to NC deactivation uses an SN that is inconsecutive to that of an NC packet or a data packet prior to the deactivation, an NC packet or a data packet subsequent to NC activation uses an SN that is inconsecutive to that of an NC packet or a data packet prior to the activation, or a data packet for NC deactivation and a data packet for NC activation use consecutive SNs.

59. The method according to any one of claims 40 to 58, wherein in the case of an NC change, the method further comprises: performing SN initialization, or using an initialized SN for an NC packet or a data packet.

60. A communication apparatus, comprising:
an execution unit, configured to perform a first operation based on first information, wherein the first information comprises network coding NC configuration information, NC input information, and/or NC state information of the apparatus, the NC state information indicates NC activation or NC deactivation, and the first operation comprises at least one of following: configuring an NC entity, configuring an NC layer, performing NC activation or NC deactivation, generating a data packet, transmitting a data packet, determining NC as being active, or determining NC as being inactive.

61. The apparatus according to claim 60, wherein the apparatus further comprises a receiving unit, configured to: receive the first information sent or indicated by a network device.

62. The apparatus according to claim 60, wherein at least one of the NC configuration information, the NC input information, or the NC state information is predefined.

63. The apparatus according to any one of claims 60 to 62, wherein the NC configuration information comprises at least one of following: identification information of coding configuration information, a quantity of segments supported by the NC, a quantity of data streams supported by the NC, a quantity of data packets supported by the NC, or an NC algorithm.

64. The apparatus according to claim 63, wherein at least one of the NC configuration information, the NC input information, or the NC state information comprises at least one of following granularities: a bearer, a packet data convergence protocol PDCP entity, a radio link control RLC entity, a NC entity, a terminal device, or a cell.

65. The apparatus according to any one of claims 60 to 64, wherein the execution unit is configured to perform at least one of following: if the NC state information represents or indicates NC activation, performing NC activation; if the NC state information represents or indicates NC deactivation, performing NC deactivation; if the NC state information represents or indicates NC activation, generating or transmitting a data packet corresponding to NC activation; if the NC state information represents or indicates NC deactivation, generating or transmitting a data packet corresponding to NC deactivation; if the NC state information represents or indicates NC activation, considering NC as being active or determining NC as being active; or if the NC state information represents or indicates NC deactivation, considering NC as being inactive or determining NC as being inactive.

66. The apparatus according to any one of claims 60 to 65, wherein the NC entity or the NC layer comprises at least one of following: an NC entity, an NC sending entity and NC receiving entity, an NC sending function and NC receiving function, a network encoding function, or a network decoding function.

67. The apparatus according to any one of claims 60 to 66, wherein the execution unit is further configured to: determine, based on the first information, NC activation or deactivation, or determine NC as being active or inactive.

68. The apparatus according to any one of claims 60 to 67, wherein the apparatus further comprises a determining unit, configured to: determine an NC state change and/or an NC state change result; and the execution unit is further configured to perform a second operation based on a changed NC state, wherein the second operation comprises at least one of following: performing an NC operation, performing NC activation, or performing NC deactivation, and the NC operation comprises at least one of following: obtaining NC input information, generating a data packet, transmitting a data packet, rolling back to duplicate transmission, generating an NC packet, outputting NC output information, performing data segmentation, or executing an NC algorithm.

69. The apparatus according to claim 68, wherein the apparatus further comprises a receiving unit, configured to: receive second information sent by the network device, wherein the second information is used to indicate NC activation or NC deactivation; and the determining unit is configured to determine the NC state change and/or the NC state change result based on the second information.

70. The apparatus according to claim 69, wherein the second information is carried in a radio resource control RRC message, a media access control control element MAC CE, or downlink control information DCI.

71. The apparatus according to claim 69 or 70, wherein the second information comprises at least one of following granularities: a bearer, a user plane bearer, a packet data convergence protocol PDCP entity, a radio link control RLC entity, an NC entity, a media access control MAC entity, or a terminal device.

72. The apparatus according to any one of claims 69 to 71, wherein the second information carries at least one of following:
an NC state change indication, a user plane bearer indication, a media access control MAC entity index indication, a packet data convergence protocol PDCP entity index indication, a radio link control RLC entity index indication, activation indication information, deactivation indication information, or the NC state change result.

73. The apparatus according to any one of claims 69 to 72, wherein the second information is determined by the network device based on third information, and the third information comprises at least one of following: channel quality, a quality of service QoS requirement, a quantity of retransmissions, a bandwidth, a channel capacity, a bit error rate, a frequency band, or application layer information.

74. The apparatus according to any one of claims 68 to 73, wherein the determining unit is configured to: determine the NC state change and/or the NC state change result based on fourth information, wherein the fourth information comprises at least one of following: channel quality, a quality of service QoS requirement, a quantity of retransmissions, a bandwidth, a channel capacity, a bit error rate, a frequency band, or application layer information.

75. The apparatus according to claim 74, wherein the determining unit is configured to: in a case that the apparatus receives the second information sent by the network device, determine the NC state change and/or the NC state change result based on the second information and the fourth information.

76. The apparatus according to claim 74 or 75, wherein the apparatus further comprises a sending unit, configured to: send fifth information to the network device, wherein the fifth information is used to indicate the NC state change and/or the NC state change result of the apparatus.

77. The apparatus according to claim 76, wherein the fifth information is carried in a radio resource control RRC message, a media access control control element MAC CE, or uplink control information UCI.

78. The apparatus according to claim 76 or 77, wherein the fifth information comprises at least one of following granularities: a bearer, a user plane bearer, a packet data convergence protocol PDCP entity, a radio link control RLC entity, an NC entity, a media access control MAC entity, or a terminal device.

79. The apparatus according to any one of claims 76 to 78, wherein the fifth information carries at least one of following: an NC state change indication, a user plane bearer indication, a media access control MAC entity index indication, a packet data convergence protocol PDCP entity index indication, a radio link control RLC entity index indication, activation indication information, deactivation indication information, or the NC state change result.

80. The apparatus according to any one of claims 68 to 79, wherein the execution unit is configured to: if the NC state is changed to NC activation, perform NC activation and/or an NC operation; if the NC state is changed to NC deactivation, perform NC deactivation; if the NC state is changed to NC activation, generate or transmit a data packet corresponding to NC activation; if the NC state is changed to NC deactivation, generate or transmit a data packet corresponding to NC deactivation; if the NC state is changed to NC activation, determine NC input information and/or NC output information corresponding to NC activation; if the NC state is changed to NC deactivation, determine NC input information and/or NC output information corresponding to NC deactivation; or if the NC state is changed to NC deactivation, determine NC input information and/or NC output information.

81. The apparatus according to any one of claims 60 to 80, wherein the apparatus comprises a first protocol stack architecture, and the first protocol stack architecture comprises an NC entity or an NC layer.

82. The apparatus according to any one of claims 60 to 81, wherein the execution unit is further configured to: submit a data packet to an NC entity or an NC layer.

83. The apparatus according to any one of claims 60 to 82, wherein the execution unit is further configured to:
in the case of the NC state change, use a first protocol stack, or maintain a first protocol stack architecture unchanged, wherein the first protocol stack architecture comprises an NC entity or an NC layer.

84. The apparatus according to any one of claims 60 to 83, wherein the execution unit is further configured to: perform an NC operation by using the NC entity or the NC layer, wherein the NC operation comprises at least one of following:
obtaining NC input information, generating a data packet, transmitting a data packet, rolling back to duplicate transmission, generating an NC packet, outputting NC output information, performing data segmentation, or executing an NC algorithm.

85. The apparatus according to claim 84, wherein the NC input information comprises at least one of following granularities: a bearer, a packet data convergence protocol PDCP entity, a radio link control RLC entity, an NC entity, a terminal device, or a cell.

86. The apparatus according to claim 84 or 85, wherein the data packet or the NC packet comprises NC information or NC state information.

87. The apparatus according to any one of claims 84 to 86, wherein the data packet or the NC packet comprises at least one of following information:
a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, or whether to perform an NC operation or NC activation or NC deactivation.

88. The apparatus according to any one of claims 84 to 87, wherein the execution unit is configured to: perform NC segmentation and NC packet padding by using the NC entity or the NC layer.

89. The apparatus according to claim 88, wherein a first value is carried in one of a data packet header, a data packet, an NC packet header, or an NC packet, wherein the first value is an actual value, a non-special value, a non-default value, or a non-all-zero value.

90. The apparatus according to claim 88 or 89, wherein at least one of the quantity of data streams supported by the NC, the quantity of data packets supported by the NC, or the quantity of NC segments is greater than 1.

91. The apparatus according to any one of claims 84 to 87, wherein the execution unit is configured to perform at least one of following operations by using the NC entity or the NC layer: skipping performing NC segmentation, skipping performing NC packet padding, using identification information of default encoding configuration information, or skipping performing NC coding.

92. The apparatus according to claim 91, wherein a second value is carried in one of a data packet header, a data packet, an NC packet header, or an NC packet, wherein the second value is a special value, a default value, or an all-zero value.

93. The apparatus according to claim 91 or 92, wherein at least one of the quantity of data streams supported by the NC, the quantity of data packets supported by the NC, or the quantity of NC segments is equal to 1.

94. The apparatus according to any one of claims 91 to 93, wherein in the case of an NC change, NC packet or data packet SNs are consecutive or inconsecutive.

95. The apparatus according to any one of claims 91 to 94, wherein an NC packet subsequent to NC deactivation uses a sequence number SN that is consecutive to that of an NC packet prior to the deactivation, or a data packet subsequent to NC deactivation uses an SN that is consecutive to that of a data packet prior to the deactivation, or a data packet for NC deactivation and a data packet for NC activation use consecutive SNs.

96. The apparatus according to any one of claims 91 to 94, wherein an NC packet subsequent to NC activation uses a sequence number SN that is consecutive to that of an NC packet prior to the activation, or a data packet subsequent to NC activation uses an SN that is consecutive to that of a data packet prior to the activation, or a data packet for NC deactivation and a data packet for NC activation use consecutive SNs.

97. The apparatus according to any one of claims 91 to 96, wherein the NC entity or the NC layer serves as an NC transmitting end, and the execution unit is configured to perform at least one of following operations on a data packet that is prior to NC deactivation: deleting all stored data packets; deleting at least one of following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of following data packets: an unsent data packet, a data packet without an acknowledgment ACK feedback, or a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; or deleting an NC entity or an NC layer corresponding to the data packet.

98. The apparatus according to any one of claims 91 to 96, wherein the NC entity or the NC layer serves as an NC receiving end, and the execution unit is configured to perform at least one of following operations on a data packet that is prior to NC deactivation: deleting all data packets that have not been submitted to a higher layer; submitting a corresponding data packet to a higher layer after performing NC coding; deleting an NC entity corresponding to the data packet; or indicating a data packet receiving result to a peer end.

99. The apparatus according to any one of claims 60 to 81, wherein the apparatus comprises a first protocol stack architecture and a second protocol stack architecture, the first protocol stack architecture comprises an NC entity or an NC layer, and the second protocol stack architecture does not comprise an NC entity or an NC layer.

100. The apparatus according to claim 99, wherein the execution unit is further configured to: in the case of the NC state change, use the first protocol stack architecture or the second protocol stack architecture, or change the first protocol stack architecture or the second protocol stack architecture.

101. The apparatus according to claim 99 or 100, wherein the execution unit is further configured to perform at least one of following: adding or maintaining an NC entity or an NC layer; using the first protocol stack architecture or changing to the first protocol stack architecture; or submitting a data packet to an NC entity or an NC layer.

102. The apparatus according to any one of claims 99 to 101, wherein the execution unit is further configured to: perform an NC operation by using the NC entity or the NC layer, wherein the NC operation comprises at least one of following: obtaining NC input information, generating an NC packet, generating a data packet corresponding to NC activation, transmitting a data packet corresponding to NC activation, transmitting an NC packet, outputting NC output information, performing data segmentation, performing NC packet padding, or executing an NC algorithm.

103. The apparatus according to claim 102, wherein the NC input information comprises at least one of following granularities: a bearer, a packet data convergence protocol PDCP entity, a radio link control RLC entity, an NC entity, a terminal device, or a cell.

104. The apparatus according to claim 102 or 103, wherein the data packet or the NC packet comprises NC information or NC state information.

105. The apparatus according to claim 102 or 103, wherein the data packet or the NC packet comprises at least one of following information: a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

106. The apparatus according to any one of claims 99 to 105, wherein the execution unit is configured to: perform NC segmentation and NC packet padding by using the NC entity or the NC layer.

107. The apparatus according to claim 106, wherein a first value is carried in one of a data packet header, a data packet, an NC packet header, or an NC packet, wherein the first value is an actual value, a non-special value, a non-default value, or a non-all-zero value.

108. The apparatus according to claim 106 or 107, wherein at least one of the quantity of data streams supported by the NC, the quantity of data packets supported by the NC, or the quantity of NC segments is greater than 1.

109. The apparatus according to claim 99 or 100, wherein the execution unit is further configured to perform at least one of following: deleting or suspending an NC entity or an NC layer; using the second protocol stack architecture or changing to the second protocol stack architecture; skipping transmitting a data packet through an NC entity or an NC layer, or skipping submitting a data packet to an NC entity or an NC layer; skipping generating an NC packet; skipping adding an NC packet header to a data packet; skipping adding NC information to a data packet; skipping adding NC state information to a data packet; or skipping performing an NC operation.

110. The apparatus according to claim 99 or 100, wherein the data packet or the NC packet does not comprise NC information or NC state information.

111. The apparatus according to claim 99 or 100, wherein the data packet or the NC packet does not comprise at least one of following information:
a quantity of NC segments, a quantity of NC data streams, a quantity of NC data packets, identification information of coding configuration information, whether to perform NC segmentation, a quantity of NC segments, whether a segment being a first NC segment, whether a segment being a last NC segment, whether to carry padding information, a length of padding information, a sequence number SN, whether to perform an NC operation or NC activation or NC deactivation, or NC state information.

112. The apparatus according to claim 99 or 100, wherein a first value is not carried in one of a data packet header, a data packet, an NC packet header, or an NC packet, wherein the first value is an actual value, a non-special value, a non-default value, or a non-all-zero value.

113. The apparatus according to any one of claims 109 to 112, wherein the NC entity or the NC layer serves as an NC transmitting end, and the execution unit is further configured to perform at least one of following operations on a data packet that is prior to NC deactivation: deleting all stored data packets; deleting at least one of following data packets at a lower layer: an unsent data packet, a data packet without an acknowledgment ACK feedback, a data packet for which successful sending is not confirmed, or all data packets; sending a deletion indication to a lower layer; instructing a lower layer to delete at least one of following data packets: an unsent data packet, a data packet without an acknowledgment ACK feedback, or a data packet for which successful sending is not confirmed, or all data packets; performing NC rollback operation on, and/or submitting, to a lower layer, a data packet for which an NC operation has been performed before NC deactivation; performing data sending for a data packet for which an NC operation has been performed before NC deactivation or a data packet that has been submitted to a lower layer; or deleting an NC entity or an NC layer corresponding to the data packet.

114. The apparatus according to any one of claims 109 to 112, wherein the NC entity or the NC layer serves as an NC receiving end, and the execution unit is further configured to perform at least one of following operations on a data packet that is prior to NC deactivation: deleting all data packets that have not been submitted to a higher layer; submitting a corresponding data packet to a higher layer after performing NC coding; deleting an NC entity corresponding to the data packet; or indicating a data receiving result to a peer end.

115. The apparatus according to any one of claims 99 to 114, wherein in the case of an NC change, NC packet or data packet SNs are consecutive or inconsecutive.

116. The apparatus according to any one of claims 99 to 115, wherein an NC packet or a data packet subsequent to NC deactivation uses an SN that is consecutive to that of an NC packet or a data packet prior to the deactivation, an NC packet or a data packet subsequent to NC activation uses an SN that is consecutive to that of an NC packet or a data packet prior to the activation, or a data packet for NC deactivation and a data packet for NC activation use consecutive SNs.

117. The apparatus according to any one of claims 99 to 116, wherein an NC packet or a data packet subsequent to NC deactivation uses an SN that is inconsecutive to that of an NC packet or a data packet prior to the deactivation, an NC packet or a data packet subsequent to NC activation uses an SN that is inconsecutive to that of an NC packet or a data packet prior to the activation, or a data packet for NC deactivation and a data packet for NC activation use consecutive SNs.

118. The apparatus according to any one of claims 99 to 117, wherein in the case of an NC change, the execution unit is further configured to: perform SN initialization, or use an initialized SN for an NC packet or a data packet.

119. A communication apparatus, comprising a memory and a processor, wherein the memory is configured to store a program, and the processor is configured to invoke the program in the memory to perform the method according to any one of claims 1 to 59.

120. A communication apparatus, comprising a processor, configured to invoke a program from a memory to perform the method according to any one of claims 1 to 59.

121. A chip, comprising a processor, configured to invoke a program from a memory to cause a device installed with the chip to perform the method according to any one of claims 1 to 59.

122. A computer-readable storage medium, wherein the computer-readable storage medium stores a program, and the program causes a computer to perform the method according to any one of claims 1 to 59.

123. A computer program product, comprising a program that causes a computer to perform the method according to any one of claims 1 to 59.

124. A computer program, wherein the computer program causes a computer to perform the method according to any one of claims 1 to 59.
